# DEMANDE DE BREVET EUROPEEN

(11) **EP 1 041 769 A1**
(43) Date de publication de la demande: **04.10.2000**
(21) Numéro de dépôt: 00400329.9
(22) Date de dépôt: 07.02.2000
(51) Int. Cl.: H04L 12/24

(54) **Agent permettant l'accès à une base de règles, au sein d'un réseau de gestion des télécommunications**

(30) Priorité: 29.03.1999 FR 9903864
(71) Demandeur: ALCATEL, 75008 Paris (FR)
(72) Inventeur: Bonnavaud, Patrick, 75019 Paris (FR); Girard, Eric, 91940 Les Ulis (FR)
(74) Mandataire: Croonenbroek, Thomas Jakob

(57) **Abrégé**

Agent (A) conforme aux recommandations de la série M.3000 de l'ITU-T, comportant au moins une interface (I) permettant l'accès à un module de gestion d'une base de règles (R), et au moins un objet géré (MO) associé à cette ou ces interfaces et réalisant automatiquement les traductions nécessaires entre celles-ci et le module.

L'invention s'applique particulièrement à la corrélation d'alarmes dans un réseau de gestion des télécommunications.

## Description

La présente invention concerne un agent au sein d'un système de gestion de réseau, notamment de réseau de télécommunication, permettant l'accès à une base de règles, par un protocole de type CMIP ou CORBA. L'invention s'applique particulièrement bien aux dispositifs de corrélation d'alarmes dans un tel système.

On rappelle que selon les recommandations de la série M.3000 de l'ITU-T (*International Télécommunication Union*), un système de gestion de réseau (ou RGT pour Réseau de Gestion des Télécommunications, selon le vocabulaire propre à ces recommandations), comporte un grand nombre d'agents dont la fonction est de fournir des services de relativement bas niveaux à des *managers* ayant, quant à eux un rôle de plus haut niveau de gestion du réseau. Typiquement, un agent fournit à un ou plusieurs *managers* une vue d'un ensemble d'éléments du réseau de télécommunication géré. Ces éléments de réseau peuvent par exemple être des commutateurs ou des moyens de transmissions...

Dans un but de supervision du réseau de télécommunication, ces différents éléments de réseau peuvent être amenés à générer des alarmes. Dans le cas d'un problème réel survenant sur le réseau, le nombre des éléments de réseau concernés peut être très élevé, et il en est donc de même pour le nombre d'alarmes générées. Il convient donc d'ajouter au sein du réseau de gestion des télécommunications, un système de corrélation d'alarmes dont le but est d'analyser ces différentes alarmes afin de réaliser ou d'aider à la réalisation d'un diagnostic.

Selon l'état de l'art, le système de corrélation d'alarmes peut être sous la forme d'un produit comportant à la fois un module de gestion d'une base de règles, permettant la réalisation de la corrélation d'alarmes, ainsi qu'un module d'interface graphique, permettant l'affichage de résultats issus du module de gestion de la base de règles et la modification de celle-ci par un opérateur. On peut citer à titre d'exemple d'un tel produit, le produit *Ilog Rules*, de la société Ilog.

Néanmoins, une telle solution comporte des inconvénients majeurs. En effet, de part l'architecture même de ce type de produit les deux modules ne peuvent être exécutés que dans un même processus, c'est-à-dire sur un même système de traitement de l'information.

Or dans le cas de la corrélation d'alarmes au sein d'un réseau de gestion des télécommunications, la corrélation d'alarmes doit être réalisée par un serveur actif en permanence et qui habituellement ne dispose pas de moyen de visualisation. Au contraire, l'interface graphique peut n'être active que de façon épisodique et nécessite un moyen de visualisation.

Le but de la présente invention est de fournir un moyen pour permettre le découplage du module de gestion de la base de règles et du module d'interface graphique.

Pour ce faire, l'invention a pour objet un agent conforme aux recommandations de la série M.3000 de l'ITU-T, comportant au moins une interface permettant l'accès à un module de gestion d'une base de règles, et au moins un objet géré associé à cette ou ces interfaces, cet objet géré étant apte à réaliser automatiquement les traductions nécessaires entre celles-ci et le module.

Cette interface peut être par exemple conforme à la recommandation X.710 de l'ITU-T ou bien aux spécifications CORBA (*Common Object Request Broker*) issues de l'OMG (*Open Management Group*).

La présente invention a aussi pour objet un dispositif constitué d'un premier système de traitement de l'information comportant un tel agent, et d'un second système de traitement de l'information comportant un composant logiciel associé à un moyen de visualisation. Ce composant logiciel possède des moyens pour communiquer avec l'interface susmentionnée de l'agent. Typiquement, ce composant logiciel est un *manager* au sens des recommandations M.3000 et suivantes de l'ITU-T.

Le dispositif selon l'invention permet donc de répartir le module de gestion de la base de règles et le moyen de visualisation. Ces deux éléments peuvent alors être mis en oeuvre sur deux systèmes de traitement de l'information différents, reliés par un réseau de communication.

Un autre avantage est que ce dispositif permet d'associer plusieurs modules de gestion de bases de règles à un seul moyen de visualisation, ou, réciproquement, plusieurs moyens de visualisation à un unique module de gestion de bases de règles.

Encore un autre avantage de l'invention est que les particularités du module de gestion de la base de règles (qui provient, la plupart du temps, d'un fournisseur différent du développeur du système informatique dans lequel il est utilisé) sont cachées derrière l'interface qui peut être standardisée. Ainsi, le développeur du réseau de gestion des télécommunications n'a pas besoin de se préoccuper de la façon de communiquer avec le module de gestion de la base de règles en fonction de sa provenance.

Par ailleurs, cela permet de changer de module de gestion de la base de règles, en cours de développement, ou même après la délivrance du réseau de gestion des télécommunications, sans remettre en question l'ensemble du système : seul l'agent, et plus particulièrement l'objet géré responsable de la traductions, est impacté.

D'autres avantages et caractéristiques de l'invention vont maintenant être présentés dans la description qui va suivre, en relation avec les figures annexées.

La figure 1 illustre un agent selon l'invention.

La figure 2 schématise une première application de l'invention.

La figure 3 schématise une deuxième application de l'invention.

La figure 4 schématise une troisième application de l'invention.

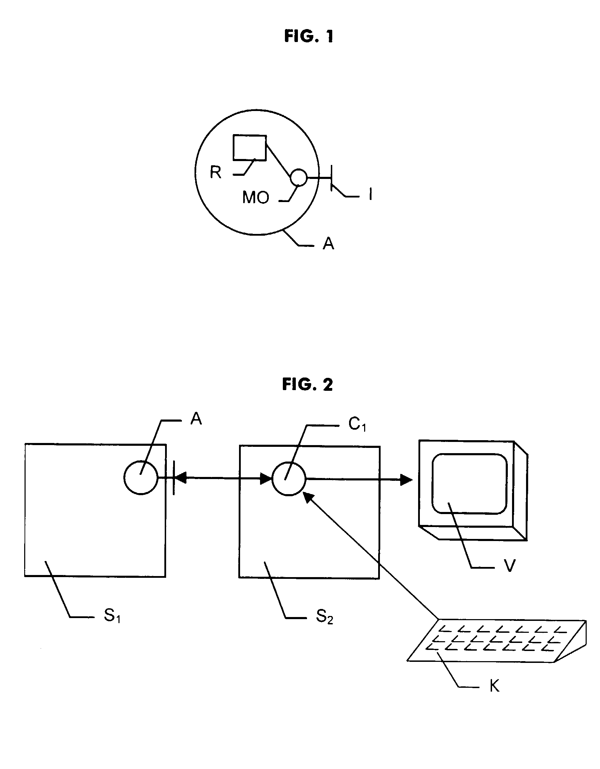

Sur la figure 1, la référence A représente l'agent selon l'invention. Cet agent comporte une interface I permettant à des composants logiciels extérieurs à l'agent, d'accéder à un module de gestion d'une base de règles R. À cette interface I, est associé un objet géré MO qui est chargé de la traduction entre l'interface et la base de règles.

Classiquement, le module de gestion de la base de règles comporte un certain nombre de fonctions, ou bien de méthodes dans le cas d'un module orienté objets. Ces fonctions peuvent par exemple être rendues accessibles par une API (pour *Application Programming Interface*, en anglais). La syntaxe et les structures de données de ces fonctions sont propres au module de gestion de la base de règles.

L'interface I rend accessible ces fonctions, depuis l'extérieur à l'agent A, selon des structures de données conformes à cette interface.

De façon connue en soi, l'interface I peut être décrite en langage GDMO (*Guideline for the Definition of Managed Objects*) ainsi qu'il est préconisé par la recommandation X.722 de l'ITU-T. Dans ce cas, l'agent A communique avec d'autres composants logiciels, comme par exemple, des *managers*, par un protocole de communication de type CMIP (*Common Management Information Protocol*), ainsi que défini par la recommandation X.710 de l'ITU-T.

Selon une autre mise en oeuvre de l'invention, l'interface I peut être décrite selon le langage de description IDL (*Interface Description Language*), spécifié par l'OMG (*Open Management Group*). L'agent A communique alors avec d'autres composants logiciels, comme, par exemple, des *managers, via* un protocole de communication de type CORBA IOP (*Common Object Request Broker Architecture - Inter ORB Protocol*).

Le rôle de l'objet géré est d'effectuer les traductions entre d'une part le module de gestion de la base de règles, et d'autre part l'interface I.

La figure 2 illustre une première application de l'invention. Dans cet exemple, un composant logiciel C₁ localisé sur un système de traitement de l'information S₁ est en communication avec un agent A conforme à l'invention et localisé sur un système de traitement de l'information S₂. Ce dernier est associé à un moyen de visualisation V, par exemple un moniteur de micro-ordinateur classique.

Le composant logiciel C₁ peut par exemple être un composant logiciel de type manager selon la terminologie des recommandations M.3000 et suivantes de l'ITU-T. Dans ce cas, la communication entre le composant logiciel C₁ et l'agent A peut être faite conformément au protocole CMIP, ou bien, selon une autre mise en oeuvre par un protocole objets comme le protocole IOP (*Inter-ORB Protocol*) de CORBA (*Common Object Request Broker Architecture*) qui est une architecture logicielle distribuée promue par l'OMG (*Open Management Group*).

Dans cet exemple, le premier système de traitement de l'information S₁ est toujours actif et permet d'analyser des alarmes provenant d'autres systèmes de traitement de l'information. Le système de traitement de l'information S₂ réalise une fonction d'interface avec un opérateur. Il peut n'être qu'épisodiquement actif. Le client C est un module logiciel réalisant une telle fonction. Il peut par exemple se connecter à l'agent A et récupérer certaines informations pour les afficher sur le moyen de visualisation V.

Inversement, il peut récupérer des commandes de l'opérateur à travers un moyen de saisie (K), et les émettre à l'agent A afin de modifier la base de règles qu'il contient. Pour ce faire, le composant logiciel C₁ possède des moyens pour convertir les données provenant de ce moyen de saisie en un format apte à être compris par l'interface I de l'agent A.

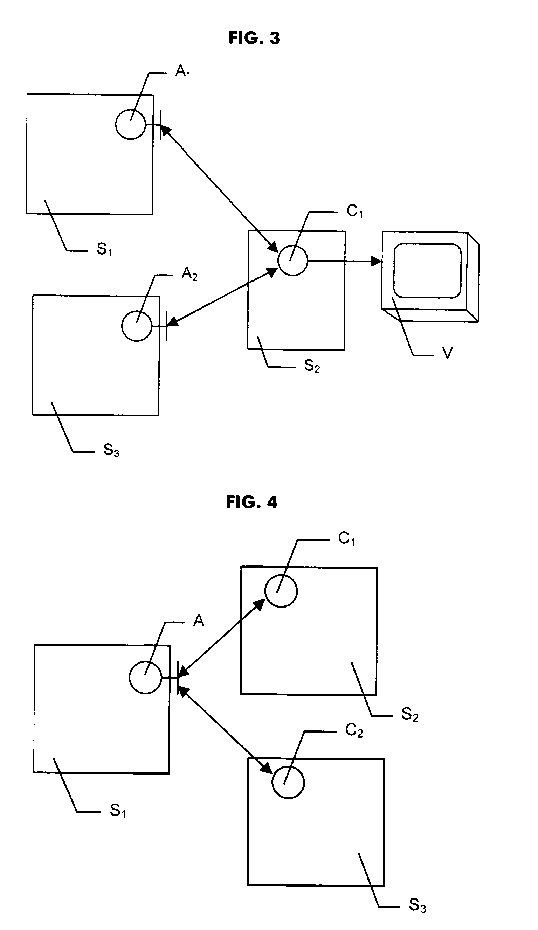

La figure 3 illustre un second exemple de mise en oeuvre de l'invention. Dans cet exemple, un composant logiciel C_{1,} similaire à celui de l'exemple précédent, peut se connecter à plusieurs agents A₁ et A₂ localisés sur des systèmes de traitement de l'information S₁ et S₃ distincts.

On peut ainsi, par exemple, accéder à plusieurs bases de règles à travers une unique interface graphique (V) et un unique moyen de saisie (non représenté sur la figure).

Une autre possibilité consiste à réaliser de la corrélation d'alarmes distribuée. Dans ce cas, le composant logiciel C₁ met en oeuvre des algorithmes de traitement des informations obtenues des différents agents (A₁, A₂) afin d'en réaliser une synthèse.

Les modules de gestion de bases de règles contenus dans les agents A₁ et A₂ peuvent permettre faire du filtrage sur les alarmes provenant des équipements gérés par ces agents et de générer des alarmes de plus haut niveau sémantique.

Le composant logiciel C₁, peut alors recevoir des alarmes provenant des deux agents A₁ et A₂ mais relatives à un même problème (par exemple une rupture d'une connexion se répercute sur les deux équipements formant extrémité de la connexion). Le composant logiciel C₁ peut alors avoir pour rôle de corréler les alarmes reçues, c'est-à-dire de mettre en correspondance les alarmes provenant de sources différentes mais relatives à un même problème afin de générer, par exemple, qu'une seule donnée visualisable sur le moyen de visualisation V. L'avantage est alors une meilleure lisibilité du moyen d'affichage (un problème sur un réseau de télécommunication peut générer plusieurs centaines d'alarmes sur les différents équipements le constituant), et donc améliorer le temps de réaction de l'opérateur ayant en charge la surveillance et la maintenance du réseau de télécommunication géré.

Dans l'exemple illustré par la figure 4, deux clients (C₁ et C₂) communiquent avec un unique agent A. Ces deux clients sont localisés sur des systèmes de traitement de l'information distincts, S₂ et S₃ respectivement. Lorsque le premier client modifie la base de règles contenue dans l'agent A, par l'intermédiaire des fonctions mises à disposition par l'interface associée à cet agent, ce dernier envoie une notification à destination du client C₂.

Bien évidemment, ce procédé est généralisable à plus de 2 clients.

Il est à noter que cet agent A peut n'envoyer des notifications qu'aux agents qui se sont enregistrés auprès de lui comme désirant recevoir de telles notifications. Plus précisément, cet enregistrement peut simplement consister à l'initiation d'une communication.

## Revendications

1. Agent (A) conforme aux recommandations de la série M.3000 de l'ITU-T, caractérisé en ce qu'il comporte au moins une interface (I) permettant l'accès à un module de gestion d'une base de règles (R), et au moins un objet géré (MO) associé à ladite au moins une interface, ledit au moins un objet géré étant apte à réaliser automatiquement les traductions nécessaires entre ladite au moins une interface et ledit module.

2. Agent selon la revendication 1, caractérisé en ce que ladite au moins une interface est conforme à la recommandation X.710 de l'ITU-T.

3. Agent selon la revendication 1, caractérisé en ce que ladite au moins une interface est conforme aux spécifications CORBA, issues de l'OMG.

4. Agent selon l'une des revendications précédentes, caractérisé en ce que pour chaque modification de ladite base de règles, ledit objet géré envoie au travers de ladite au moins une interface, une ou plusieurs notifications à destination des composants logiciels enregistrés auprès dudit agent.

5. Dispositif constitué d'un premier système de traitement de l'information (S₁) comportant un agent (A) conforme à l'une des revendications précédentes, et d'un second système de traitement de l'information (S₂) comportant un composant logiciel (C₁) associé à un moyen de visualisation (V), ledit composant logiciel (C₁) possédant des moyens pour communiquer avec ladite au moins une interface dudit agent (A).

6. Dispositif selon la revendication précédente, caractérisé en ce que ledit composant logiciel (C₁) est en outre associé à un moyen de saisie (K) et possède des moyens pour convertir des données provenant dudit moyen de saisie en un format compréhensible par ladite au moins une interface dudit agent.
